# EUROPEAN PATENT APPLICATION

(11) **EP 1 147 714 A2**
(43) Date of publication of application: **24.10.2001**
(21) Application number: 01303650.4
(22) Date of filing: 20.04.2001
(51) Int. Cl.: A23P 1/08, A23L 1/164

(54) **Coating of food products with a particulate flavouring composition**

(30) Priority: 20.04.2000 GB 0009888
(71) Applicant: UNITED BISCUITS (UK) LIMITED, West Drayton, Middlesex UB7 7PR (GB)
(72) Inventor: Selwyn-Smith, Jerome, Selwyn, Wokinham RG41 1HW (GB); Denton, John Rodney, Mancetter CV9 2RD (GB); Martin, Paul Nicholas, North Yorkshire TS9 5QA (GB)
(74) Representative: Humphreys, Ceris Anne

(57) **Abstract**

A method of processing and packaging food items which comprises dividing a supply of the food items into measured batches, applying a predetermined dose of a flavouring composition in particulate form to each of the measured batches of food items, and packaging each batch of the food items so treated into a discrete package. The flavouring composition is dispensed by a screw feeder arranged with its axis substantially vertical.

## Description

The invention relates to the processing and packaging of food items.

In the production of certain food items, for example, snack foods, it is usual to apply a flavouring composition, which is generally in a fine particulate form, to food items. The flavouring composition is commonly applied to snack food products by introducing a stream of the products into a drum with a supply of the flavouring composition delivered directly into the drum. The snack food products are tumbled in the drum with the flavouring composition and, at the end of a certain period within the drum, flavoured snack food products emerge from the drum, are divided into batches each of a suitable weight or volume for an individual package, and are packaged, for example, in a so-called vertical-form-fill-seal bagging machine. This process suffers from certain disadvantages. One disadvantage is that there tends to be a significant variation in flavour of the resulting snack food products, with a lack of uniformity in the flavour of snack food items of a single batch and also between snack food items of different batches. Another disadvantage is that, after leaving the drum, flavouring powder tends to fall from the snack food products as they are subjected to further handling, leading to contamination of further handling apparatus, and periodic stoppage and cleaning is required. Such contamination of weighing apparatus for dividing the snack food products into batches is especially disadvantageous.

A proposal to overcome such problems is described in GB 2 337 191A which discloses apparatus for coating snack food products such as potato crisps with a flavouring composition by dividing coating material into charges of a predetermined size, and applying the charges of coating material to the food product downstream of a batch-forming apparatus and at, or directly upstream of, a packaging apparatus which encloses the batches of coated product in discrete packages. The charges of coating material can be produced using a weigher and a rotary valve. The charges so obtained can be applied to the product by injecting them using a fluid-pressure injector device providing a gas stream to entrain particles of the coating material.

When used for applying flavouring composition to snack food products, it has been found that difficulties arise in dividing the flavouring composition into the said charges because the hygroscopic nature of the flavouring composition causes clogging of the rotary valve, leading to inaccurate and inconsistent doses of flavouring composition being applied to the snack food and necessitating frequent cleaning of the equipment. In addition, the application of the flavouring composition by entraining it in a gas stream and injecting it at or in the region of the packaging apparatus also causes difficulties when the packaging apparatus is a vertical-form-fill-seal bagging machine as is commonly used for packaging snack food products. That is because finer particles of the flavouring may enter and weaken transverse seals, each of which forms the upper seal of one bag and the bottom seal of the next bag.

The invention provides a method of processing and packaging food items comprising dividing a supply of the food items into measured batches, applying a predetermined dose of a flavouring composition in particulate form to each of the measured batches of food items, and packaging each batch of the food items so treated into a discrete package, the flavouring composition being dispensed for application of the predetermined doses to the measured batches of food items by a screw feeder arranged with its axis substantially vertical.

The invention also provides apparatus for processing and packaging food items comprising processing apparatus for applying a predetermined dose of a flavouring composition in particulate form to a measured batch of food items and apparatus for packaging each batch of the food items so treated into a discrete package, the processing apparatus comprising a screw feeder arranged with its axis substantially vertical and operable to dispense the flavouring composition for application of the predetermined doses to the measured batches of food items.

Advantageously, the screw feeder is operable to dispense the flavouring composition in the said predetermined doses, preferably, in response to control signals. Such an arrangement has been found to be able to deliver consistently accurate doses consisting of relatively small amounts of flavouring composition (which may be, or include, salt or other seasonings) for application to batches of food items, for example, snack food products. The size of the doses is advantageously determined by selecting the number (including fractions of whole numbers) of turns through which the screw feeder rotates for each dose, the said number of turns preferably being adjustable. The sizes of the doses dispensed by the screw feeder may be selected so as to be of a weight within the range of from 0.2 to 30g, preferably, 0.3 to 4g, depending on the kind of flavouring composition to be applied to the food product, including its range of particle sizes, and the level of flavouring required for each batch of the food product.

Advantageously, the screw feeder is supplied with the flavouring composition by means of a hopper arranged to allow the composition to fall into the screw feeder. Preferably, the screw feeder is provided with agitator means arranged to agitate the flavouring. The agitator means may, for example, comprise one or more rotatable paddles arranged to extend into the flavouring composition.
The use of a screw feeder to dispense the flavouring composition is especially advantageous when the flavouring composition is subsequently applied to the food items by entraining the flavouring composition in a carrier gas and forming a spray or cloud of the flavouring composition in a confined region through which a measured batch of the food items is caused or allowed to pass. When, as is advantageous, the screw feeder is arranged to dispense the flavouring composition in separate predetermined doses, the doses can be successively entrained in the carrier gas.

Advantageously, in such an arrangement there is provided control means arranged to co-ordinate the dispensing of each dose from the screw feeder and its subsequent dispersal in the form of a spray or cloud in the confined region with the arrival in the confined region of a batch of food items to which the flavouring composition is to be applied, and also to co-ordinate those steps with the operation of the packaging apparatus, which should generally be ready to accept the batch of flavoured food items immediately after it has passed through the said region. Preferably, the coordination by the control means is such that a relatively small proportion, for example, up to 10% by weight, of each dose of the flavouring composition is introduced into the confined region at a position in advance of the batch of food items to which it is to be applied and the remainder of the dose is sprayed into the region as the items fall through the region. It has been found that, in that manner, consistently accurate doses of flavouring composition can be applied to batches of food items and the batches can be individually packaged, without the need for frequent cleaning of the apparatus. Also, in the method and apparatus of the invention, a changeover to the use of a different flavouring composition can be effected more easily and rapidly than when using a tumbling drum for applying flavouring composition as described above.

The batches of flavoured food items are advantageously packaged at a location directly below the confined region, which may be provided, at least in part, by a former of the packaging apparatus around which bags for packaging the individual batches are formed.

The use of a carrier gas for transporting the flavouring composition can, however, cause problems. Flavouring composition used for flavouring potato crisps and other snack food products may consist of as many as 20 or 30 different ingredients. Some of the ingredients commonly included in flavouring compositions such as onion powder, whey powder, maltodextrin, and sometimes rusk, are composed of very fine particles with a large proportion being of a size less than 100µm. When, as is advantageous, the flavouring composition is applied to the food items by entraining it in a stream of a carrier gas and forming a spray or cloud of the flavouring composition in a confined region at, or adjacent to, the packaging apparatus, the very fine particles may be moving at relatively high speeds on introduction into the confined region and can travel considerable distances. Although they will adhere to the food items that they encounter, they also have a tendency to adhere to any other surface that they meet such as the walls of the confined region. There is also a risk that the finer particles of the flavouring composition will enter seals of the packages and reduce the effectiveness of the seals.

To reduce or substantially eliminate those problems, one option is to remove carrier gas and finer particles of flavouring composition from the region of the packaging apparatus using a source of reduced pressure in communication with the said confined region. In such an arrangement, the source of reduced pressure is preferably a vacuum pump.

Another advantageous option is that of binding such fine particles together with other particles of the ingredients of the flavouring composition and/or with each other to form composite particles. By using larger, composite particles, such problems can be reduced and even substantially eliminated. Advantageously, therefore, the flavouring composition comprises composite particles formed by binding together particles of the flavouring composition into larger particles. Such composite particles may be formed by blowing a gas such as air, preferably warm air, through a bed of particles in the presence of a liquid, for example, water, sucrose solution, gum, or oil, so that the particles adhere to each other to form larger particles which are then dried.

The composite particles are advantageously of sizes substantially within the range of from 100 to 800 µm, and, preferably, at least a major proportion of the composite particles is of sizes within the range of from 250 to 500 µm. Ideally, the composite particles are all of sizes within the range of from 250 to 350 µm, but in practice that is usually difficult to achieve. The sizes of the particles can be determined using microscopy, a suitable technique involving taking different samples of the particles, dispersing the particles of each sample in oil and, when stationary, measuring the particles using a calibrated graticule. Alternatively, the sizes of the particles can be determined using a laser particle analyser.

Each composite particle may consist of particles of at least a majority of the ingredients of the flavouring composition. Alternatively, the composite particles may consist of particles of only those finer ingredients, for example, those ingredients having a large proportion of particles of sizes less than 100 µm. Thus, each composite particle may consist of particles of only one ingredient, or particles of only a small number of ingredients.

A further option for avoiding or substantially eliminating the problems referred to above is that instead of using flavouring composition including ingredients, for example onion powder, whey powder, and maltodextrin, in their usual fine particulate form, those ingredients, if present, may be used in a coarser form so that substantially all the particles have sizes within the range of from 100 to 800 µm. Advantageously, at least a major proportion of the particles is of sizes within the range of from 250 to 500 µm. Ideally, the particles are all of sizes within the range of from 250 to 350 µm although in practice that is usually difficult to achieve. The sizes of the particles can again be determined using microscopy or laser particle analysis as described above.

Advantageously, the passage of each batch of the food items as they pass, or immediately after passing, through the said spray or cloud of flavouring composition in the confined region and before being packaged is checked (halted or braked) before being allowed to continue. The passage of the food items is advantageously checked using valve means or other such means, for example, a receiving vessel or timing hopper situated in the path of the food items, which can be opened, or removed from the path of the food items, after a predetermined interval. The food items of each batch are advantageously halted for a relatively brief period, preferably, a period within the range of from 50 to 150 milliseconds, for example, 100 milliseconds. Such an arrangement increases the period during which the flavouring composition can adhere to the food product. The valve means or other such means is then opened, or removed, briefly to allow the flavoured food product to pass through and be packaged, and re-closed. The interval during which the valve means or other such means is open may be of the order of 300milliseconds. The valve means is preferably an iris valve, which opens from the centre.

In an arrangement in which the screw feeder dispenses separate predetermined doses and the steps of the process are co-ordinated by control means as discussed above, the rate at which the predetermined doses are dispensed by the screw feeder, which will be referred to herein as the dispensing frequency, depends upon the rate of operation of the packaging apparatus, and more precisely, if the packaging apparatus operates a packaging cycle, on the number of packaging cycles carried out per unit time, which will be referred to herein as the packaging frequency. As the packaging frequency is increased, so the dispensing frequency is increased. With the arrangement of the invention, it is possible for the dispensing frequency to be increased to such an extent that a predetermined dose of the flavouring composition dispensed by the screw conveyor and entrained in the stream of the carrier gas is only just separate and distinct from a successive dose. Indeed, assuming that the packaging frequency can be raised sufficiently, the dispensing frequency can be such that there is no clearance between successive doses of the flavouring composition and the flow of flavouring composition in the entrained gas instead of being in discontinuous doses is effectively continuous. In such a situation, the flavouring composition is continuously sprayed into the confined region, a predetermined dose of the flavouring composition for each batch of food items then being the amount of flavouring composition available in the confined region for each batch of food items as it passes through. The amount of the predetermined dose of flavouring composition in those circumstances is dependent on the rate of flow of flavouring composition from the screw feeder, which conveniently then operates continuously to dispense the flavouring composition at a predetermined rate, and is also dependent on the batch delivery frequency (that is to say, the rate at which the batches of food items arrive in the confined region).

Although reference has been made above to packaging the food items into bags, the packaging apparatus may be arranged to package the food items into other forms of container, for example, thermo-formed pots or prefabricated paper containers.

Whereas the apparatus and method of the invention have been described above in relation to applying flavouring to snack food products, the invention can readily be used in production processes involving other food items and to which it is desired to apply an edible substance in particulate form prior to packaging.

Apparatus for processing and packaging food items, and a method thereof, in accordance with the invention will now be described, by way of example, with reference to the drawings, in which:
Fig. 1 is a schematic diagram of the apparatus of the invention;
Fig. 2 is a diagram of a screw feeder for use in the apparatus of Fig. 1; and
Fig. 3 is a control diagram for the apparatus of Fig. 1.

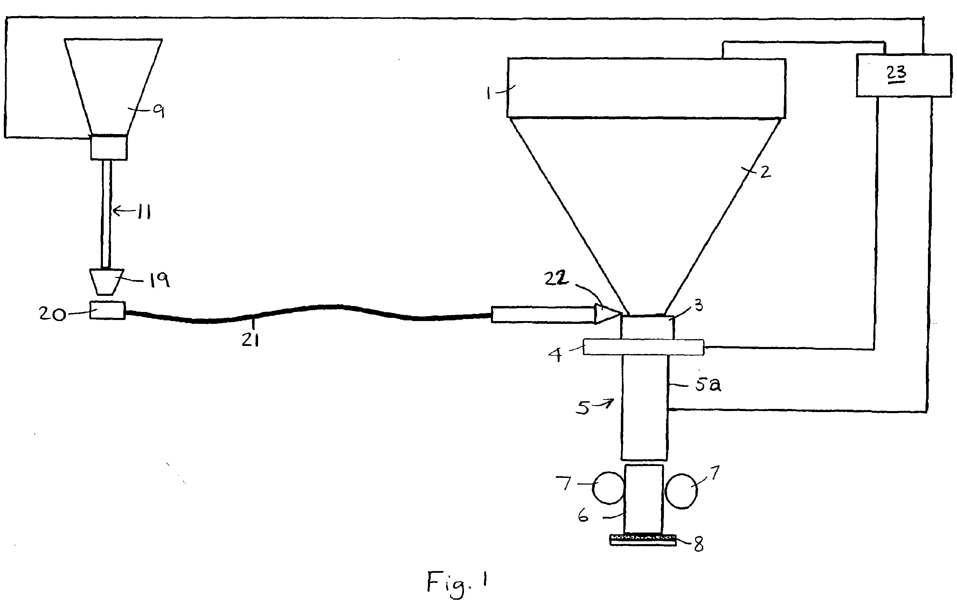

Referring to the accompanying drawings, and initially to Fig. 1, a batch weigher 1 is arranged to collect food items (not shown) from a supply of food items, such as snack food products, for example, potato crisps, and divide the food items into batches of predetermined weight for delivery, in turn, to a hopper 2 situated directly beneath the weigher.

Immediately below the outlet of the hopper 2 is a chamber 3 open at its upper end for receiving food items from the hopper 2. Directly below the chamber 3 is an iris valve 4, which is normally closed but which opens from the centre to allow food items to pass from the chamber 3 into a tubular former 5a of a vertical-form-fill-seal bagmaker machine, indicated generally by the reference numeral 5, situated directly below the iris valve. The bagmaker 5 is arranged to package each batch of the food items into a separate bag 6. The bagmaker 5 operates in a cycle in which each bag 6 is formed from a film or foil by bringing the longitudinal edges of the film together around the outside of the former 5a and using heat-seal jaws (not shown) to form a longitudinally-extending back seal. Rollers 7 take the film down the former 5a, and further heat-seal jaws 8 are arranged to form a transverse seal across the film, that seal forming the top seal of one bag 6 and the bottom seal of the next bag, the film being cut by the jaws as they form the transverse seal. Each bag 6 receives a batch of food items from the batch weigher 1 before its top transverse seal is formed. The cycle is then repeated.

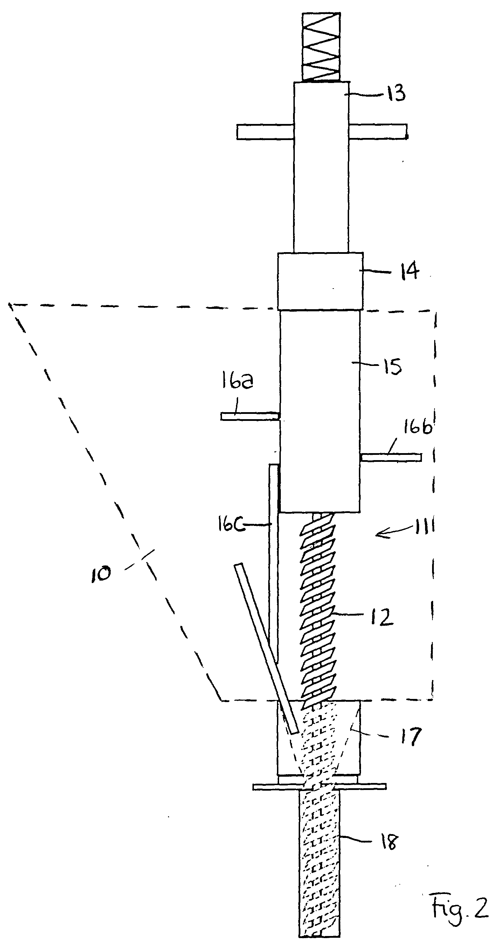

Flavouring composition comprising particles, a major proportion of which is of sizes within the range of from 250 to 500µm, is supplied from a loading hopper 9 under gravity to an auger hopper 10 (shown diagrammatically in broken lines in Fig. 2), through which an auger feeder, indicated generally by the reference numeral 11 extends with its axis arranged vertically. The flavouring composition may comprise or consist of composite particles formed by blowing warm air through a bed of particles in the presence of water, sucrose solution, gum or oil, so that the particles adhere to each other to form larger particles, which are then dried.

The auger feeder 11 (only shown schematically in Fig. 1, but shown more clearly in Fig. 2) comprises an auger screw 12 with a bayonet fixing 13, the auger screw being arranged to rotate about the vertical axis and being driven through the bayonet fixing. Below a locking collar 14, an agitator sleeve 15 is mounted to rotate with the auger screw 12 and carries agitator paddles 16a, 16b and 16c, respectively, arranged to extend into the flavouring composition around the auger feeder 11 and to rotate, in operation, to prevent bridging of the flavouring composition within the hopper 10. The paddle 16c extends down into a nozzle 17 located at the base of the hopper 10 and supplied with flavouring composition from that hopper. The auger screw 12 passes down through the nozzle 17 and down a delivery tube 18 secured to the bottom of the nozzle.

The auger feeder 11 is arranged to rotate by a set number of turns (including fractions of whole numbers), the number being adjustable, to collect flavouring composition from the nozzle 17 and convey it down the delivery tube 18 to dispense a dose of flavouring composition of a volume determined by the degree of rotation of the auger screw 12 into a small cup 19 located over an air mover 20. The air mover 20 is arranged to cause the flavouring composition to become entrained in a stream of air which flows along an air delivery line 21 to a spray nozzle 22. The spray nozzle 22 is arranged to introduce into a confined region comprising a region at the base of the hopper 2 and the interior of the chamber 3 a spray of the measured dose of the flavouring composition, which may be dispersed into a cloud.

Control means 23 is provided to control and co-ordinate operation of the weigher 1, the iris valve 4, the bagmaker machine 5, the auger feeder 11 and hence the spray nozzle 22 in a manner described in more detail below.

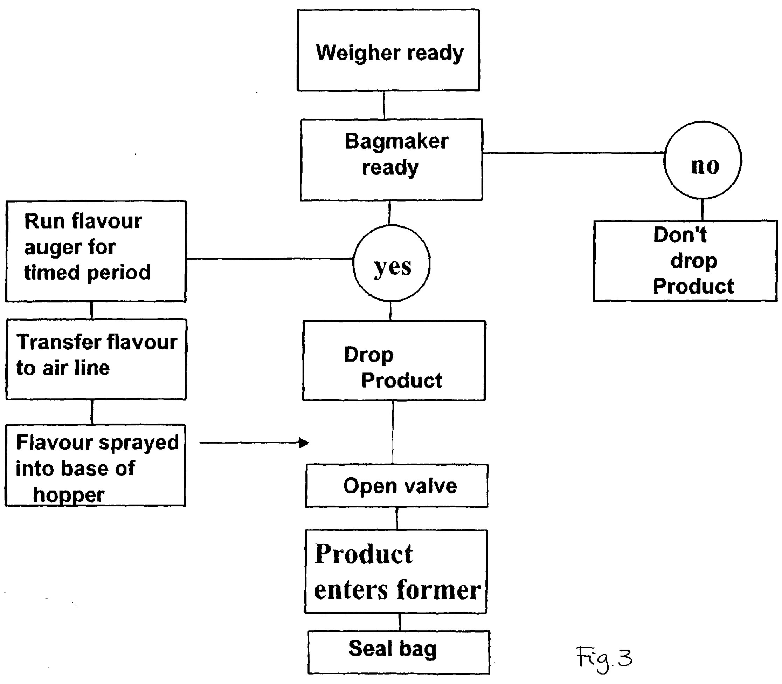

In operation, with reference to Fig. 3, when the batch weigher 1 has collected a batch of snack food products of a predetermined weight it sends a signal to the control means 23. If the bagmaker 5 is not ready to begin its packaging cycle and gives a "No" signal, the batch of food products is held on the weigher 1. When the bagmaker 5 is ready to begin its packaging cycle, it gives a "Yes" signal and the control means 23 sends a signal to the batch weigher 1 to drop the batch of food items into the hopper 2, and the control means also sends a signal to the auger feeder 11. The auger feeder 11 is supplied with the flavouring composition from the hoppers 9 and 10 and, on receipt of a signal from the control means 23, begins its set number of turns to dispense the measured dose of the flavouring composition to the cup 19. The dose of flavouring composition passes through the cup 19 to the air mover 20 where it is entrained in a stream of air and carried along the air delivery line 21 to the spray nozzle 22 for introduction into the confined region as a spray.

The signals given to the auger feeder 11 and the batch weigher 1 are timed so that the spray nozzle 22 starts to spray the flavouring composition of the dose of flavouring composition to be applied to the snack food products into the confined region at the base of the hopper 2 and in the chamber 3 just before the first items of the batch of snack food product reaches within range of the spray nozzle. Approximately 10% by weight of the dose is sprayed into the confined region before the first items of the batch reach within range of the nozzle 22. The spray nozzle 22 continues to spray the flavouring composition onto the snack food products as they fall past the spray nozzle. The food products are checked briefly in their fall by the iris valve 4 on which they land. The iris valve 4 remains closed for approximately 100milliseconds after the batch of food products has landed in order to prolong the period during which the flavouring composition can adhere to the food products. After 100milliseconds, the iris valve 4 is given a signal by the control means 23 to open, whereupon it opens from its centre, allowing the batch of flavoured food product to pass through into the former 5a of the bagmaker 5. At that point, the bagmaker 5 has a bag 6 ready to receive the product, arid the bag is given its top transverse seal.

Assuming that the bagmaker 5 can operate at a sufficiently high packaging frequency, the rate at which doses of flavouring composition are required in the confined region for application to batches of food product may be such that the auger feeder 11 conveniently operates continuously to supply flavouring composition to the air delivery line 21 at a constant, predetermined rate.

## Claims

1. A method of processing and packaging food items comprising dividing a supply of the food items into measured batches, applying a predetermined dose of a flavouring composition in particulate form to each of the measured batches of food items, and packaging each batch of the food items so treated into a discrete package, the flavouring composition being dispensed for application of the predetermined doses to the measured batches of food items by a screw feeder arranged with its axis substantially vertical.

2. A method as claimed in claim 1, wherein the screw feeder dispenses the flavouring composition in the said predetermined doses.

3. A method as claimed in claim 2, wherein the screw feeder is operable to dispense the said doses in response to control signals.

4. A method as claimed in claim 2 or claim 3, wherein the size of the doses of the flavouring composition is determined by selecting the number (including fractions of whole numbers) of turns through which the screw feeder rotates for each dose.

5. A method as claimed in claim 4, wherein the said number of turns is adjustable.

6. A method as claimed in any one of claims 2 to 5, wherein the size of the doses dispensed by the screw feeder are within the range of from 0.2 to 30g, preferably, 0.3 to 4g.

7. A method as claimed in any one of claims 1 to 6, wherein the screw feeder is supplied with the flavouring composition from a hopper from which the composition falls into the screw feeder.

8. A method as claimed in any one of claims 1 to 7, wherein the screw feeder is provided with agitator means arranged to agitate the flavouring composition.

9. A method as claimed in any one of claims 1 to 8, wherein the flavouring composition is applied to the food items by entraining the flavouring composition in a carrier gas and forming a spray or cloud of the flavouring composition in a confined region through which a measured batch of the food items is caused or allowed to pass.

10. A method as claimed in claim 9, wherein the screw feeder dispenses the flavouring composition in the said predetermined doses and wherein control means coordinates the dispensing of each dose from the screw feeder and its subsequent dispersal in the form of a spray or cloud in the confined region with the arrival in the confined region of a batch of food items, and also with the operation of the packaging apparatus.

11. A method as claimed in claim 10, wherein the coordination by the control means is such that a relatively small proportion of each dose of the flavouring composition is introduced into the confined region at a position in advance of the batch of food items to which it is to be applied and the remainder of the dose is sprayed into the region as the items fall through the region.

12. A method as claimed in any one of claims 9 to 11, wherein the batches of flavoured food items are packaged at a location immediately below the confined region.

13. A method as claimed in any one of claims 9 to 12, wherein the said confined region is in communication with a source of reduced pressure, preferably, a vacuum pump.

14. A method as claimed in any one of claims 9 to 13, wherein the flavouring composition comprising composite particles formed by binding together the particles of the flavouring composition into larger particles.

15. A method as claimed in claims 14, wherein the composite particles are formed by blowing a gas through a bed of particles in the presence of a liquid so that the particles adhere to each other to form larger particles which are then dried.

16. A method as claimed in claim 14 or claim 15, wherein the composite particles are of sizes substantially within the range of from 100 to 800 µm.

17. A method as claimed in claim 16, wherein at least a major proportion of the composite particles is of sizes within the range of from 250 to 500 µm.

18. A method as claimed in any one of claims 14 to 17, wherein each composite particle consists of particles of at least a majority of the ingredients of the flavouring composition.

19. A method as claimed in any one of claims 9 to 13, wherein the flavouring composition consists of particles of sizes substantially within the range of from 100 to 800 µm.

20. A method as claimed in claim 19, wherein the flavouring composition consists of particles a major proportion of which is of sizes within the range of from 250 to 500 µm.

21. A method as claimed in any one of claims 9 to 20, wherein the passage of each batch of the food items immediately after passing through the said spray or cloud and before being packaged is checked.

22. A method as claimed in claim 21, wherein the passage of each batch of the food items is checked using valve means, preferably an iris valve, situated in the path of the food items.

23. A method as claimed in claim 22, wherein each batch of food items is halted for a period within the range of from 50 to 150 milliseconds.

24. A method as claimed in claim 1, wherein the screw feeder operates continuously to dispense flavouring composition at a predetermined rate.

25. Apparatus for processing and packaging food items comprising processing apparatus for applying a predetermined dose of a flavouring composition in particulate form to a measured batch of food items and apparatus for packaging each batch of the food items so treated into a discrete package, the processing apparatus comprising a screw feeder arranged with its axis substantially vertical and operable to dispense the flavouring composition for application of the predetermined doses to the measured batches of food items.

26. Apparatus as claimed in claim 25, wherein the screw feeder is operable to dispense the flavouring composition in the said predetermined doses.

27. Apparatus as claimed in claim 25 or claim 26 for carrying out the method as claimed in any one of claims 1 to 24.

28. A food product processed and packaged by a method as claimed in any one of claims 1 to 24.

29. A discrete package containing a batch of food items to which a dose of a flavouring composition has been applied in accordance with any one of claims 1 to 24.
